(19) Europäisches Patentamt
European Patent Office
Office européen des brevets

(11) **EP 1 849 895 A1**

## (12) EUROPEAN PATENT APPLICATION

(43) Date of publication:
**31.10.2007 Bulletin 2007/44**

(51) Int Cl.:
***D02G 3/48*** (2006.01)   ***D01F 2/00*** (2006.01)

(21) Application number: **06018691.3**

(22) Date of filing: **06.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.04.2006 KR 20060038084**

(71) Applicant: **Hyosung Corporation**
**431-080 Kyonggi-do (KR)**

(72) Inventors:
 • **Seok-Jong, Han**
  **Anyang-si**
  **Kyonggi-do, 431-080 (KR)**

 • **Soo-Myung, Choi**
  **Anyang-si**
  **Kyonggi-do, 431-080 (KR)**
 • **Young-Soo, Wang**
  **Anyang-si**
  **Kyonggi-do, 431-080 (KR)**
 • **Sung-Ryong, Kim**
  **Anyang-si**
  **Kyonggi-do, 431-080 (KR)**
 • **Tae-Jung, Lee**
  **Anyang-si**
  **Kyonggi-do, 431-080 (KR)**

(74) Representative: **Beier, Ralph**
 **v. Bezold & Partner**
 **Patentanwälte**
 **Akademiestrasse 7**
 **80799 München (DE)**

(54) **Cellulose raw cord for rubber reinforcement**

(57) The present invention provides a lyocell raw cord prepared from at least 2-ply lyocell multifilaments, which gives a stress-strain curve exhibiting that (a) the lyocell raw cord has an elongation of 1.5% or less at an initial stress of 1.0 g/d, and an initial modulus value of 50 to 100 g/d; (b) has an elongation of 7% or less in a stress region of 1.0 g/d to 4.0 g/d; and (c) has an elongation of 1% or more at a tensile strength of 4.0 g/d to the breaking point, as measured in the dried state.

The lyocell raw cord prepared according to the present invention can be used as industrial fibers, in particular, fibers for tire cords.

[Fig. 2]

**Description**

**BACKGROUND OF THE INVENTION**

**1. Field of the Invention**

The present invention relates to a lyocell raw cord having high tenacity and high modulus, suitable for industrial fibers, preferably tire cord fibers, by controlling the stress-strain curve. Specifically, the present invention relates to a lyocell raw cord with excellent physical properties suitable for a tire cord, which is prepared by dissolving cellulose in N-methylmorpholine N-oxide (hereinafter referred to as NMMO)/water, and then spinning the resultant through a suitably designed spinning nozzle.

**2. Description of the Related Art**

Generally, a large amount of tire cords are used for the reinforcement constituting the inside of the tire, and the tire cords are considered as an important element for maintaining the shape of the tire and giving the ride comfort. The materials for the cords which are currently used include a variety of materials such as polyester, nylon, aramid, rayon and steel, each of which cannot completely satisfy various functions required for the tire cords. The basic performances required for such the materials for the tire cords include (1) high tenacity and initial modulus (2) heat resistance, and strength retention under dry/wet conditions, (3) fatigue resistance, (4) dimensional stability, (5) excellent adhesiveness with a rubber, or the like. Thus, each material for cords is being used depending on the applications as determined according to the intrinsic physical properties thereof.

Among them, the most important advantage of the rayon tire cord is that it has heat resistance and dimensional stability, and thus, it maintains the elastic modulus even at high temperatures. Accordingly, because of such the low shrinkage and excellent dimensional stability, it has been usually used for the radial tire for high-speed driving vehicles. However, the rayon tire cord has disadvantages such as lowered tenacity due to moisture absorption caused by the easily wettable chemical or physical structure with low tenacity and modulus.

On the other hand, the lyocell fiber, which is a regenerated fiber made of cellulose has lower elongation and heat shrinkage, and high tenacity and modulus, as compared with the rayon fibers, thus excellent dimensional stability. The lyocell fiber also has low moisture regain, and thus as high as 80% or more of maintenances of tenacity and modulus even under wet condition. Thus, it has an advantage of relatively little change in the shape as compared with the rayon (60%), and therefore it can be envisaged as an alternative in response to the above described requirements. However, it still has problems such as low fatigue resistance due to low elongation and high crystallinity for the tire cords, whereby any tire cord using the same does not exist at present. However, the method for preparing a lyocell fiber by NMMO is used in many processes for preparing a product made of cellulose as a raw material because it is a environment-friendly process providing recovery of a whole amount of solvents and recycle of the same, and the prepared fibers and films have high mechanical tenacity.

The present invention is intended to provide a raw cord suitable for tire cords, by preparing the raw cord from the filament obtained in the process for preparing lyocell having many advantages as described above using a direct twister.

**SUMMARY OF THE INVENTION**

The present invention aims to provide a lyocell raw cord which gives a stress-strain curve suitable particularly for tire cords, by directly dissolving cellulose in an NMMO hydrate as a solvent; suitably controlling the conditions for spinning, water washing, oil treatment and drying to obtain an industrial lyocell filament; and subjecting the lyocell filament to twisting and heat treatment, in order to solve the problems such as low tenacity and low initial modulus of the conventional viscose rayon tire cords.

In the present invention, firstly the stress-strain profiles of the raw cord of a commercially used viscose rayon were analyzed (Comparative Example 1). Further, the present invention used a method for dissolving cellulose in NMMO, which is distinct from the conventional viscose processes, to prepare a lyocell multi filament, in order to improve the low tenacity and the low initial modulus of the viscose rayon, and then modifying the conditions such as the change in the twist number of twisting process, and the like, to improve the low tenacity and the low initial modulus of the viscose rayon.

**BRIEF DESCRIPTION OF THE DRAWINGS**

Fig. 1 illustrates a schematic view showing a spinning process for preparing a high tenacity lyocell filament for a tire cord according to the present invention;

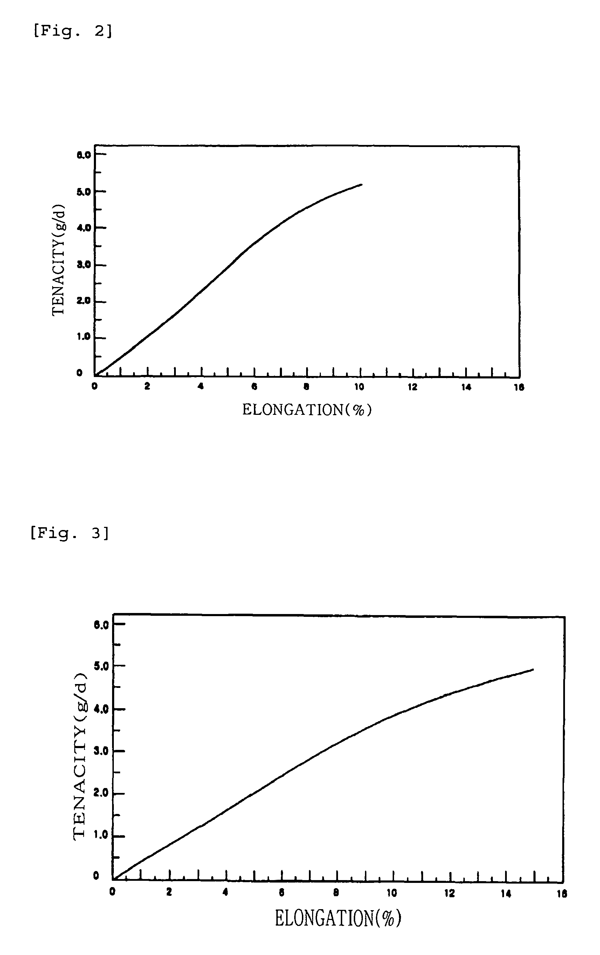

Fig. 2 illustrates a graph showing an example of an S-S (Stress-Strain) curve of the raw cord obtained by twisting the lyocell filament prepared according to the present invention using a direct twister.

Fig. 3 illustrates a graph showing an example of an S-S (Stress-Strain) curve of the viscose rayon (Super-III) raw cord which is presented as a Comparative Example of the present invention.

## DESCRIPTION OF THE PREFERRED EMBODIMENTS

The lyocell raw cord according to the present invention is characterized in that it is prepared by at least 2-ply lyocell multifilaments, and it gives a stress-strain curve exhibiting that (a) the lyocell raw cord has an elongation of 1.5% or less at an initial stress of 1.0 g/d, and an initial modulus value of 50 to 100 g/d; (b) has an elongation of 7% or less in a stress region of 1.0 g/d to 4.0 g/d; and (c) has an elongation of 1% or more at a tensile strength of 4.0 g/d to the breaking point, as measured in the dried state.

Further, the lyocell raw cord preferably has a twist number of 250 to 550 TPM (turns per meter).

Further, the lyocell raw cord preferably has the strength of 16.0 to 30.0 kgf.

Further, the lyocell raw cord is characterized in that it has a density of 1.48 to 1.52 g/cm$^3$.

Further, the lyocell multifilament is characterized in that it has a degree of crystalline orientation of 0.80 or more.

Further, the lyocell multifilament preferably has a coefficient of dynamic friction of 0.2 to 0.6.

Further, the raw cord is prepared by twisting 2- or 3- ply lyocell multifilament.

Further, a tire is provided, which comprises the lyocell raw cord.

As such, the present invention solves the problems of a conventional viscose rayon such as low tenacity and low initial modulus by providing a lyocell raw cord prepared from at least 2-ply lyocell multifilaments, which gives a stress-strain curve exhibiting that (a) the lyocell raw cord has an elongation of 1.5% or less at an initial stress of 1.0 g/d, and an initial modulus value of 50 to 100 g/d; (b) has an elongation of 7% or less in a stress region of 1.0 g/d to 4.0 g/d; and (c) has an elongation of 1% or more at a tensile strength of 4.0 g/d to the breaking point, as measured in the dried state. Therefore, the present invention has an effect to provide a lyocell tire cord with excellent dimensional stability and heat resistance.

Generally, a cord fabric for a tire is prepared by weaving a raw cord into a fabric, dipping the fabric in a common resorcinol-formalin-latex (RFL) solution, and then subjected the resultant to heat treatment. In order to maintain dimensional stability of the fabric woven from a raw cord in the above-described heat treatment process, a high initial modulus of the lyocell raw cord is required. For this reason, the lyocell raw cord of the present invention preferably has an elongation of 1.5% or less at an initial stress of 1.0 g/d, and an initial modulus of 50 to 100 g/d. If the raw cord has an elongation of more than 1.5% at an initial stress 1.0 g/d, the dimensional stability is low in the heat treatment process, thereby causing drastic deformation of the fabric.

Further, the lyocell raw cord of the present invention preferably has an elongation of 7% or less in a stress region of 1.0 g/d to 4.0 g/d, and thus if the raw cord has an elongation of more than 7%, the dimensional stability is low, thereby causing the problems such as occurrence of severe deformation of a tire upon driving a car.

Further, in order to design an energy-saving car, it is preferable that the weight of the tire is minimized. Thus, for achieving this, a high tenacity tire cord is required. The lyocell raw cord of the present invention preferably gives a stress-strain curve exhibiting that the lyocell raw cord has an elongation of 1% or more at a tensile strength of 4.0 g/d to the breaking point. This is because, when the lyocell raw cord has an elongation of less than 1% at a tensile strength of 4.0 g/d to the breaking point of the raw cord, the maximum tensile load-absorbing ability is insufficient, and thus, it becomes difficult to reduce the weight of the cord fabric per a tire and the fatigue resistance is drastically lowered.

Hereinafter, the present invention will be described in detail.

In order to prepare the lyocell filament as defined in the present invention, a high purity cellulose pulp should be used, and in order to prepare a high-quality cellulose fiber, a pulp having a high content of α-cellulose is preferably used. This is because the use of the cellulose molecule with a high degree of polymerization allows high orientation structure and high crystallization, thereby high tenacity and high initial modulus being possibly expected. Accordingly, the cellulose used in the present invention is a soft wood pulp with a DP of 1,200 and a content of α-cellulose of 93% or more.

NMMO is known as a solvent having excellent solubility of cellulose and having no toxicity. The NMMO used in the present invention is the form of a hydrate controlled to about 87% concentration, since the presence of water is essential for providing the solubility of cellulose by opening the pores of the high crystalline cellulose. In order to suppress the thermal decomposition of the NMMO hydrate and provide stability of the cellulose solution, a small amount of 3,4,5-trihydroxybezoic acid propyl ester (hereinafter, referred to as propyl gallate) was added.

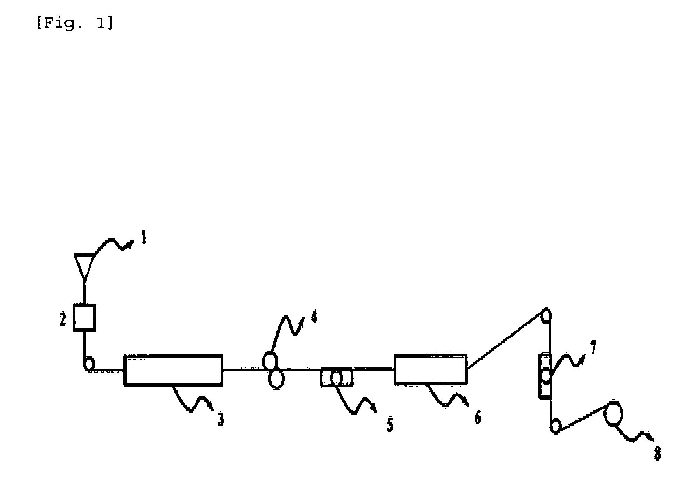

In order to dissolve cellulose in NMMO, physical forces such as a shear force is required, and in the present invention, a twin screw extruder was used to dissolve cellulose in NMMO. Thus obtained cellulose solution was spun through a nozzle with an orifice diameter of 100 to 200 μm and an orifice length of 200 to 1,600 μm such that the ratio of the orifice diameter to the orifice length is about 2 to 8, and then subjected to the process as depicted in Fig. 1 to obtain a lyocell filament. The process for preparing the lyocell filament as disclosed in Fig. 1 is as follows.

The solution extruded from the spinning nozzle (1) passes through an air gap in the vertical direction and is solidified in a coagulation bath (2). The air gap suitably has a length of 10 to 300 mm to obtain a dense and uniform fiber and to provide a good cooling effect.

The filament which passed through the coagulation bath (2) then passes through a washing bath (3). The temperatures of the coagulation bath (2) and the washing bath (3) are preferably controlled to about 10 to 25°C in order to prevent the dropping of the physical properties caused by the formation of the pores due to rapid diffusion of solvent.

The fiber which passed through the washing bath (3) passes through a squeezing roller (4) to remove water, and then passes through a first finishing oil treatment unit (5).

Thereafter, the filament which passed through the first finishing oil treatment unit (5) is dried over a dryer (6). At this time, the drying temperature, the drying method, the drying tension, and the like largely affect the post-processes and the physical properties of the filament. In the present invention, the drying temperature was controlled for a moisture regain in the process of 7 to 13%.

The filament which passed through the dryer (6) passes through a secondary finishing oil treatment unit (7) and is finally wound in a winder (8).

Further, in some cases, only one unit of a first finishing oil treatment unit or a second finishing oil treatment unit can be used to feed an oil to the filament.

Then, the yarn of the prepared filament was twisted using a direct twister to prepare a raw cord, and the raw cord was dipped in a conventional resorcinol-formalin-latex (RFL) solution, and then subjected to heat treatment to prepare a 'dipped cord'.

The industrial high tenacity cord, in particular, the lyocell raw cord used for a tire cord, of the present invention, imparts high dimensional stability by controlling the stress-strain curve of the lyocell raw cord. The stress-strain curve of the lyocell raw cord of the present invention preferably exhibits that the lyocell raw cord has an elongation of 1.5% or less at an initial stress of 1.0 g/d, and an initial modulus value of 50 to 100 g/d; an elongation of 7% or less in a stress region of 1.0 g/d to 4.0 g/d; and an elongation of 1% or more at a tensile strength of 4.0 g/d to the breaking point.

The factors which affect the stress-strain curve include a coefficient of dynamic friction between the lyocell filament-filament. The values of the coefficient of dynamic friction are preferably 0.01 to 3.0, more preferably 0.1 to 2.5, and even more preferably 0.2 to 0.6. If the value of the coefficient of dynamic friction is less than 0.01, slip is generated in the twisting process, whereas if the value of the coefficient of dynamic friction is more than 3.0, damage is caused to the cord in the twisting process, thereby lowering the tenacity and the fatigue resistance. For the purpose of controlling the above-described coefficient of dynamic friction, the finishing oil can be applied to the surface of the filament. The amount of the finishing oil to be applied is preferably 0.1 to 7% by weight, more preferably 0.2 to 4% by weight, and even more preferably 0.4 to 1.5% by weight, relative to the weight of the fiber. If the amount of the finishing oil to be applied is less than 0.1% by weight, damage is caused to the cord in the twisting process, thereby lowering the tenacity and the fatigue resistance, whereas if the amount of the finishing oil to be applied is more than 7% by weight, slip is generated in the twisting process.

The finishing oil used in the present invention is not particularly limited, but preferably, the finishing oil contains at least one compound selected from the group consisting of the following compounds (1) to (3) as essential components, and the summed amount of the essential components is 30 to 100% by weight, relative to the total weight of the finishing oil.

    (1) Ester compound with molecular weight of 300 to 2000
    (2) Minerals
    (3) Copolymer of ethylene oxide and propylene oxide, with molecular weight of 300 to 2000

Another factor which affects the stress-strain curve of the present invention includes the degree of crystalline orientation of the lyocell multifilament. The degree of crystalline orientation is preferably 0.80 or more, and more preferably 0.90 or more. If the degree of crystalline orientation is less than 0.80, the orientation of the molecular chains is insufficient, and thus, due to the lowered tenacity of the raw cord, it is impossible to give a stress-strain curve exhibiting an elongation of 1% or more at a tensile strength of 4.0 g/d to the breaking point. The process factors which affect the degree of crystalline orientation include the concentration of the cellulose in the NMMO solvent, the ratio of the length/diameter of the orifice, the quenching condition, the temperature of the coagulation bath, and the like. By suitably controlling various process factors as described above, the degree of crystalline orientation of the cord can be controlled to 0.80 or more.

The other factor which affects the stress-strain curve of the present invention includes the density of the raw cord. The density of the raw cord is preferably 1.48 to 1.54 g/cm$^3$, and more preferably 1.50 to 1.52 g/cm$^3$. If there are many voids in the raw cord, or the filament develops in a skin core structure too much, the density of the raw cord becomes less than 1.48 g/cm$^3$, and thus it is impossible to obtain a stress-strain curve according to the present invention due to the deficient compactness and tenacity. If the density of the raw cord is more than 1.54 g/cm$^3$, the elongation of the raw cord is too reduced, and thus the stress-strain curve exhibits that the cord has an elongation of less than 1% at a tensile strength of 4.0 g/d to the breaking point, thereby causing the fatigue resistance to be lowered.

Hereinafter, the twisting, weaving and heat treatment processes of the present invention will be described in detail.

The lyocell multifilament prepared by the above-described process are twisted using a direct twister, in which two wound yarns are false-twisted and ply-twisted at one time, to prepare a 'raw cord' for a tire cord. Further, the raw cord having more than three ply can be prepared by using a direct twister, in which yarns of more than three plys are false-twisted and ply-twisted at one time. The raw cord is prepared by applying a ply twist and then a cable twist and ply-twisting the lyocell multifilaments, and generally the ply twist and the cable twist thus have the numbers of twist which are the same or different from each other if necessary.

Generally, the physical properties such as the strength and the elongation at break, the elongation at specific load, the fatigue resistance, and the like vary depending on the level of the twist (number of twist) given to the multifilament. Generally, in the case of high twisting, there is tendency that the tenacity is reduced and the elongation at specific load and elongation at break are increased. The fatigue resistance tends to be improved by the increase the number of twist. The lyocell tire cord as prepared in the present invention has the number of twist of 250/250 TPM to 550/550 TPM in both of the ply twist, and the cable twist. Providing the same value of the number of the ply twist and the cable twist to each other does not exhibit rotation, twisting, or the like of the prepared tire cord and facilitates the maintenance of the linear form, thus to maximize the physical properties. Here, in the case of less than 250/250 TPM, the elongation at break of the raw cord is decreased, thus the fatigue resistance being likely to be lowered, whereas in the case of more than 550/550 TPM, the reduction in tenacity is large, thus it being not suitable for a tire cord.

The prepared raw cord is woven using a weaving machine, and the obtained fabric is dipped in a dipping solution, and then cured to prepare a 'dipped cord' for a tire cord having a resin layer attached on the surface of the raw cord.

To specifically describe the dipping process of the present invention, dipping comprises a process of impregnating a resin layer called as an RFL (Resorcinol-Formaline-Latex) on the surface of the fiber. Originally, dipping is carried out in order to improve the drawbacks of the fiber for a tire cord having the adhesiveness with a rubber deteriorated. A conventional rayon fiber or a nylon is commonly subject to one-bath dipping, and in the case of using a PET fiber, the number of the functional groups on the surface of the PET fiber is smaller than that of the rayon fiber or the nylon fiber, thus firstly the surface of the PET is activated and then adhesive treatment is performed (two-bath dipping).

The lyocell multifilament according to the present invention was prepared by one-bath dipping. As the dipping bath, a dipping bath known for a tire cord is used.

Hereinafter, the constitution and the effects of the present invention will be described in detail with reference to specific Examples and Comparative Examples, but these Examples are presented only for the purpose of facilitating the understanding of the present invention, and not intended to restrict the scope of the present invention.

In the Examples and Comparative Examples, the characteristics such as the physical properties of the cellulose solution, the filament, and the like were evaluated in the following analysis methods.

(a) Strength (kgf), tenacity g/d and initial modulus (g/d) of raw cord

The raw cord was dried at 107°C for 2 hours, and then the strength and initial modulus were measured using a low-speed elongation type tensile test machine (manufactured by Instron) with a gauge length of 250 mm at a test speed of 300 m/min. The initial load applied at an initial stage in the tensile test was applied on the basis of 0.05 g/d, and the particulars of the test were conducted according to ASTM D885. The initial modulus indicates the gradient of the stress-strain curve before the yield point. The denier of lyocell dipped cord is measured with a gauge length of 600mm at a initial load of 0.05g/d.

(b) Method for measurement of coefficient of dynamic friction

For measurement of the coefficient of friction, used was an apparatus for measuring the coefficient of friction (manufactured by Northchild (Swiss)), which uses a theory that when a fiber passes through a pulley (device for converting a linear motion to a rotary motion), a tension enough to overcome the friction generated between the surface of the pulley and the fiber is increased. While moving the fiber at 200 m/min, the values of the let off tension and the take up tension were measured using a tensiometer, and the resultant values were applied in the following equation to calculate the coefficient of friction.

$$\mu \text{ (Coefficient of friction)} = \ln \text{ (Take up tension / Let off tension)} / \theta \text{ (contact angle)}$$

(c) Method for measurement of degree of crystalline orientation (WAXD)

For measurement of the crystallinity of the multifilament, a wide angle X-ray diffraction was used as follows. Apparatus for generation of X-ray: Product manufactured by Rigaku, X-ray source: CuKα (Use of Ni filter), Output power: 50 KV 200 mA, Range for measurement: 2Θ = 5 to 45°

(d) Method for measurement of density

The specimen of the raw cord was cut to a size of 2 to 3 mm and taken out in an amount of about 0.01 g. The specimen was introduced to a density gradient column which had been prepared according to ASTM D1505, left to stand for about 24 hours and then stabilized to measure a density value.

(e) Method for measurement of the oil pick-up (OPU, %)

A specimen of the raw cord was cut to a size of 10 to 15 m, taken out in an amount of about 5.0 g, and then dried in a dryer at 107°C for 2 hours, and the resultant was weighed ($W_0$), dipped in $CCl_4$ for 2 hours to remove the finishing oil. The resultant was dried under the above-described drying condition and weighed ($W_1$), to calculate the oil pick-up.

$$\text{Oil Pick-Up (OPU, \%)} = (W_0 - W_1) / W_1 \times 100$$

[Examples 1 to 12]

A cellulose solution prepared from a V-81 pulp with a degree of polymerization ($DP_w$) of 1200 (α-cellulose content: 97%) manufactured by Buckeye Technology Inc., NMMO·$1H_2O$, and propyl gallate at a concentration of 0.045 wt% relative to the solution, was used. At this time, the settings were as follows: the concentration of cellulose was 9 to 14%, the number of the orifices was 1,000, the diameter of the orifice varied in the range of 120 to 200 μm. The solution discharged from a spinning nozzle with a ratio of the diameter and the length of the orifice (L/D) of 4 to 8, and an outer diameter of 100 mmφ was cooled through an air gap with a length of 30 to 100 mm, the spinning speed varied in the range of 90 to 150 m/min, and the final filament fineness was 1,500 deniers. The temperature of the coagulation solution is from 10 to 25°C, and the concentration was set at water 80% and NMMO 20%. The temperature and the concentration of the coagulation solution were continuously monitored using a refractometer. The residual NMMO was removed from the filament leaving from the coagulation bath through a washing process. It was subject to a first finishing oil treatment, and then dried. Thereafter, it was subject to a second finishing oil treatment, and then wound. The OPU of the wound yarn filament was adjusted to 0.1 to 0.6%. The spinning conditions and parameters were shown in Table 1. The obtained filament as described above was twisted using a direct twister at a twist number (turns per meter) of 350 to 470 TPM in both of the ply twist and the cable twist, thus to prepare a 2-ply raw cord (Examples 1 to 6). Further, the filament was twisted at a twist number of 260 to 400 TPM in both of the ply twist and the cable twist, thus to prepare a 3-ply raw cord (Examples 7 to 12).
As a result, the physical properties of the raw cord were shown in Table 2.

[Comparative Example]

Super-III, a raw cord which is at present commercially available for use as a rayon tire cord, was used under the conditions other than those as presented above to prepare a lyocell, which was evaluated in the same analysis method as in Examples. The results thereof were also shown in Tables 1 and 2.

[Table 1]

| Conditions of sample | Spinning conditions | | | | | | | | Twisting conditions | |
|---|---|---|---|---|---|---|---|---|---|---|
| | Concentration Of cellulose % | Diameter of the orifice (μm) | L / D of the orifice | Length of the air gap (mm) | Spinning speed (m/min) | Temperature of the coagulation bath (°C) | Oil pick-up (OPU) (%) | Denier | Twist number of cable twist/ply twist (TPM) | Denier |
| EX. 1 | 11.0 | 120 | 4 | 50 | 110 | 15 | 0.3 | 1500 | 470 | 3550 |
| EX. 2 | 11.5 | 150 | 6 | 60 | 130 | 15 | 0.6 | 1510 | 400 | 3480 |
| EX. 3 | 12.0 | 180 | 4 | 80 | 140 | 15 | 1.1 | 1515 | 350 | 3390 |
| EX. 4 | 13.0 | 150 | 6 | 30 | 100 | 12 | 0.5 | 1505 | 420 | 3470 |
| EX. 5 | 11.0 | 120 | 6 | 60 | 130 | 17 | 0.5 | 1520 | 450 | 3480 |
| EX. 6 | 11.5 | 200 | 4 | 100 | 150 | 23 | 0.5 | 1510 | 380 | 3405 |
| EX. 7 | 11.5 | 120 | 6 | 60 | 100 | 15 | 0.3 | 1510 | 260 | 4940 |
| EX. 8 | 11.5 | 120 | 8 | 80 | 130 | 15 | 0.6 | 1520 | 300 | 5020 |
| EX. 9 | 12.0 | 150 | 4 | 80 | 150 | 15 | 1.1 | 1500 | 340 | 4870 |
| EX. 10 | 12.5 | 180 | 6 | 50 | 110 | 12 | 0.5 | 1500 | 360 | 4990 |
| Ex. 11 | 11.0 | 200 | 4 | 60 | 130 | 17 | 0.5 | 1515 | 300 | 4890 |
| EX. 12 | 13.0 | 150 | 4 | 40 | 120 | 23 | 0.5 | 1510 | 390 | 5025 |
| Com.1 | - | - | - | - | - | - | 0.3 | 1500 | 470 | 3520 |
| Com.2 | 12.3 | 150 | 4 | 50 | 90 | 15 | 0.1 | 1500 | 240 | 3320 |
| Com.3 | 11.2 | 150 | 6 | 70 | 110 | 15 | 1.5 | 1500 | 560 | 3690 |
| Com. 4 | 11.0 | 120 | 4 | 60 | 120 | 7 | 0.5 | 1505 | 330 | 3400 |
| Com. 5 | 11.5 | 180 | 4 | 80 | 140 | 30 | 0.5 | 1510 | 420 | 3480 |

[Table 2]

| Sample condition | Multifilament | | Lyocell raw cord | | | | | | | |
|---|---|---|---|---|---|---|---|---|---|---|
| | coefficient of dynamic friction | Degree of crystal line orientation | Density (g/cm$^3$) | Tenacity (g/d) | Elongation (%) | Initial modulus (g/d) | Elongation at 1. 0 g / d (%) | Elongation of in a stress region 1. 0 g / d ~ 4. 0 g/d (%) | Elongation from 4. 0 g/d to point of break (%) |
| EX. 1 | 0.420 | 0.88 | 1.50 | 5.4 | 10.3 | 60 | 1.3 | 6.7 | 2.3 |
| EX. 2 | 0.324 | 0.87 | 1.51 | 6.1 | 8.7 | 80 | 0.9 | 6.1 | 1.7 |
| EX. 3 | 0.334 | 0.87 | 1.50 | 6.9 | 7.6 | 90 | 0.6 | 5.6 | 1.4 |
| EX. 4 | 0.354 | 0.83 | 1.52 | 6.2 | 9.0 | 70 | 1.1 | 6.0 | 1.9 |
| EX. 5 | 0.364 | 0.89 | 1.50 | 5.9 | 9.1 | 70 | 1.1 | 6.2 | 1.8 |
| EX. 6 | 0.395 | 0.92 | 1.50 | 5.2 | 10.5 | 55 | 1.4 | 6.5 | 2.6 |
| EX. 7 | 0.404 | 0.88 | 1.50 | 5.0 | 7.5 | 70 | 1.1 | 5.8 | 2.0 |
| EX. 8 | 0.350 | 0.87 | 1.50 | 4.8 | 8.4 | 60 | 1.3 | 5.4 | 1.7 |
| EX. 9 | 0.344 | 0.85 | 1.51 | 4.7 | 8.6 | 65 | 1.2 | 5.6 | 1.6 |
| EX. 10 | 0.364 | 0.83 | 1.51 | 4.5 | 9.0 | 55 | 1.4 | 5.7 | 1.9 |
| EX. 11 | 0.386 | 0.89 | 1.51 | 4.7 | 7.8 | 75 | 1.0 | 5.4 | 1.6 |
| EX. 12 | 0.374 | 0.89 | 1.50 | 4.3 | 9.6 | 55 | 1.4 | 6.2 | 2.0 |
| Com.1 | 0.415 | 0.89 | 1.50 | 4.8 | 14.5 | 40 | 1.8 | 8.2 | 4.5 |
| Com.2 | 0.489 | 0.84 | 1.49 | 6.3 | 6.6 | 110 | 0.4 | 5.4 | 0.8 |
| Com.3 | 0.417 | 0.86 | 1.50 | 4.4 | 10.2 | 50 | 1.5 | 7.8 | 0.9 |
| Com.4 | 0.387 | 0.84 | 1.47 | 5.8 | 7.0 | 65 | 1.2 | 5.0 | 0.8 |
| Com.5 | 0.359 | 0.92 | 1.46 | 5.3 | 8.7 | 45 | 1.6 | 6.2 | 0.9 |
| Com.6 | 0.484 | 0.86 | 1.49 | 5.0 | 5.8 | 90 | 0.6 | 4.5 | 0.7 |
| Com.7 | 0.409 | 0.87 | 1.50 | 3.9 | 7.4 | 70 | 1.1 | 5.4 | 0.9 |
| Com.8 | 0.373 | 0.84 | 1.48 | 4.6 | 6.4 | 75 | 1.0 | 4.6 | 0.8 |
| Com.9 | 0.352 | 0.89 | 1.47 | 4.3 | 7.5 | 60 | 1.3 | 5.3 | 0.9 |

The lyocell raw cord prepared in the present invention, as described in Examples 1 to 12 in Table 2, has an initial modulus value of 50 to 100 g/d, and a high strength of 16 kgf or more, and thus solves the problems of a conventional viscose rayon such as low tenacity and low initial modulus to provide a lyocell tire cord with excellent dimensional stability and heat resistance.

As such, the present invention solves the problems of a conventional viscose rayon such as low tenacity and low initial modulus by providing a lyocell raw cord prepared from at least 2-ply lyocell multifilaments, which gives a stress-strain curve exhibiting that (a) the lyocell raw cord has an elongation of 1.5% or less at an initial stress of 1.0 g/d, and an initial modulus value of 50 to 100 g/d; (b) has an elongation of 7% or less in a stress region of 1.0 g/d to 4.0 g/d; and (c) has an elongation of 1% or more at a tensile strength of 4.0 g/d to the breaking point, as measured in the dried state. Therefore, the present invention has an effect to provide a lyocell tire cord with excellent dimensional stability and heat resistance.

As described above, the present invention is described only with reference to specific examples, but a skilled person in the art will easily appreciate that various modifications and changes can be made without departing from the spirit of the present invention, and the modifications and changes will be apparently within the appended claims.

## Claims

1. A lyocell raw cord prepared from at least 2-ply lyocell multifilaments, which gives a stress-strain curve exhibiting that (a) the lyocell raw cord has an elongation of 1.5% or less at an initial stress of 1.0 g/d, and an initial modulus value of 50 to 100 g/d; (b) has an elongation of 7% or less in a stress region of 1.0 g/d to 4.0 g/d; and (c) has an elongation of 1% or more at a tensile strength of 4.0 g/d to the breaking point, as measured in the dried state.

2. The lyocell raw cord according to claim 1, wherein the lyocell raw cord has a density of 1.48 to 1.52 g/cm$^3$.

3. The lyocell raw cord according to claim 1, wherein the lyocell multifilament has a degree of crystalline orientation of 0.80 or more.

4. The lyocell raw cord according to claim 1, wherein the lyocell multifilament has a coefficient of dynamic friction of 0.2 to 0.6.

5. The lyocell raw cord according to claim 1, wherein the lyocell multifilament is a 2- or 3-ply lyocell multifilament.

6. The lyocell raw cord according to claim 1, wherein the lyocell raw cord has a twist number of 250 to 550 TPM (turns per meter).

7. The lyocell raw cord according to claim 1, wherein the lyocell raw cord has the strength of 16.0 to 30.0 kgf.

8. A tire comprising the lyocell raw cord according to claim 1.

[Fig. 1]

[Fig. 2]

[Fig. 3]

**European Patent Office**

**EUROPEAN SEARCH REPORT**

Application Number

EP 06 01 8691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 500 724 A (HYOSUNG CORP [KR]) 26 January 2005 (2005-01-26) * the whole document * ----- | 1-8 | INV. D02G3/48 D01F2/00 |
| X | EP 1 493 752 A (HYOSUNG CORP [KR]) 5 January 2005 (2005-01-05) * the whole document * ----- | 1-8 | |
| X | EP 1 433 881 A (HYOSUNG CORP [KR]) 30 June 2004 (2004-06-30) * the whole document * ----- | 1-8 | |
| A | EP 1 493 850 A (HYOSUNG CORP [KR]) 5 January 2005 (2005-01-05) * claims 1-9; examples 1-7 * ----- | 1-8 | |
| | | | TECHNICAL FIELDS SEARCHED (IPC) |
| | | | D01F D02G |

The present search report has been drawn up for all claims

| Place of search | Date of completion of the search | Examiner |
|---|---|---|
| Munich | 15 March 2007 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 849 895 A1**

**ANNEX TO THE EUROPEAN SEARCH REPORT
ON EUROPEAN PATENT APPLICATION NO.**                      EP 06 01 8691

This annex lists the patent family members relating to the patent documents cited in  the above-mentioned European search report.
The members are as contained in the European Patent Office EDP file on
The European Patent Office is in no way liable for these particulars which are merely given for the purpose of information.

15-03-2007

| Patent document cited in search report | | Publication date | Patent family member(s) | | Publication date |
|---|---|---|---|---|---|
| EP 1500724 | A | 26-01-2005 | CN | 1576403 A | 09-02-2005 |
| | | | JP | 2005042286 A | 17-02-2005 |
| | | | KR | 20050012446 A | 02-02-2005 |
| | | | US | 2005019564 A1 | 27-01-2005 |
| EP 1493752 | A | 05-01-2005 | AU | 2003273105 A1 | 13-01-2005 |
| | | | JP | 2005530916 T | 13-10-2005 |
| | | | WO | 2005000945 A1 | 06-01-2005 |
| | | | US | 2005160939 A1 | 28-07-2005 |
| EP 1433881 | A | 30-06-2004 | CA | 2438445 A1 | 26-06-2004 |
| | | | CN | 1511980 A | 14-07-2004 |
| | | | JP | 2004211277 A | 29-07-2004 |
| | | | US | 2004126577 A1 | 01-07-2004 |
| EP 1493850 | A | 05-01-2005 | CN | 1576416 A | 09-02-2005 |
| | | | JP | 2005023508 A | 27-01-2005 |
| | | | US | 2005066646 A1 | 31-03-2005 |

EPO FORM P0459

For more details about this annex : see Official Journal of the European Patent Office, No. 12/82

13